# EUROPEAN PATENT APPLICATION

(11) **EP 4 725 640 A1**
(43) Date of publication of application: **15.04.2026**
(21) Application number: 23940481.7
(22) Date of filing: 07.12.2023
(51) Int. Cl.: B23K 26/38, B23K 26/08, B23K 26/70

(54) **ELECTRODE SHEET DIE-CUTTING METHOD AND ELECTRODE SHEET DIE-CUTTING DEVICE**

(30) Priority: 09.06.2023 CN 202310689111; 09.06.2023 CN 202321482157 U
(71) Applicant: Eve Power Co., Ltd., Jingmen, Hubei 448000 (CN)
(72) Inventor: LI, Weibo, Jingmen, Hubei 448000 (CN); YUAN, Dingding, Jingmen, Hubei 448000 (CN); CHEN, Liquan, Jingmen, Hubei 448000 (CN); SU, Bin, Jingmen, Hubei 448000 (CN)
(74) Representative: Nederlandsch Octrooibureau
(86) International application number: PCT/CN2023/137152
(87) International publication number: WO 2024/250606

(57) **Abstract**

The present invention provides an electrode plate die-cutting method and an electrode plate die-cutting device. The electrode plate die-cutting method includes: conveying an electrode plate material strip in a first direction to a cutting area of an electrode plate die-cutting device; and adjusting, based on the electrode plate material strip, a position of each of a first laser cutting assembly and a second laser cutting assembly of the electrode plate die-cutting device to position a center point of a first laser galvanometer of the first laser cutting assembly above a predetermined electrode plate cutting line and to position a center point of a second laser galvanometer of the second laser cutting assembly above the tab cutting area.

## Description

### CROSS-REFERENCE TO RELATED APPLICATIONS

This application claims priority to Chinese Patent Application Nos. 202310689111.7 and 202321482157.3, filed with China National Intellectual Property Administration on June 09, 2023, the entire disclosure of which is incorporated herein by reference.

### FIELD

The present invention relates to the field of battery technologies, and more particularly, to an electrode plate die-cutting method and an electrode plate die-cutting device.

### BACKGROUND

Currently, a laser cutting process for wide-format electrode plates in the lithium battery industry primarily employs a plurality of groups of lasers. The plurality of groups of lasers each are located above an electrode plate centerline and arranged in a straight line, and the plurality of groups of lasers are respectively configured to cut an electrode plate cutting area and a tab cutting area.

### SUMMARY

In the related art, an acute angle is formed between a laser path of an electrode plate die-cutting process and an electrode plate material strip. When one position of the electrode plate material strip is cut repeatedly, an upper surface material at a connection between a tab foil material and an electrode plate material may be severely vaporized, resulting in severe foil exposure and powder shedding in a cutting area. In this case, a risk of short circuit after electrode plates are assembled into a cell pack is greatly increased.

Therefore, it is necessary to provide an electrode plate die-cutting method and an electrode plate die-cutting device to improve this deficiency.

Embodiments of the present invention provide an electrode plate die-cutting method and an electrode plate die-cutting device, which can solve a problem of foil exposure caused by laser cutting and thus reduce a risk of short circuit after electrode plates are assembled into a cell pack.

To this end, the following technical solutions are adopted in the present invention.

In a first aspect, embodiments of the present invention provide an electrode plate die-cutting method. The electrode plate die-cutting method includes: conveying an electrode plate material strip in a first direction to a cutting area of an electrode plate die-cutting device, enabling an electrode plate material of the electrode plate material strip to be directly opposite to an electrode plate cutting area of the cutting area and a tab foil material of the electrode plate material strip to be directly opposite to a tab cutting area of the cutting area; adjusting, based on the electrode plate material strip, a position of each of a first laser cutting assembly and a second laser cutting assembly of the electrode plate die-cutting device to position a center point of a first laser galvanometer of the first laser cutting assembly above a predetermined electrode plate cutting line and to position a center point of a second laser galvanometer of the second laser cutting assembly above the tab cutting area; and performing, by using the first laser cutting assembly, reciprocating cutting on the electrode plate material along the electrode plate cutting line to form an electrode plate, and performing, by using the second laser cutting assembly, reciprocating cutting on the tab foil material along a tab cutting line to form a tab.

The electrode plate cutting line is parallel to a second direction. The tab cutting line is parallel to the first direction. The first direction intersects the second direction.

In a second aspect, embodiments of the present invention also provide an electrode plate die-cutting device. The device is configured to cut an electrode plate material strip. The electrode plate material strip includes an electrode plate material and a tab foil material. The electrode plate die-cutting device has an electrode plate cutting area opposite to the electrode plate material and a tab cutting area opposite to the tab foil material. The electrode plate die-cutting device includes a first laser cutting assembly and a second laser cutting assembly.

The first laser cutting assembly is configured to perform reciprocating cutting, along a predetermined electrode plate cutting line, on the electrode plate material conveyed to the electrode plate cutting area of the electrode plate die-cutting device to form an electrode plate. The electrode plate material strip is conveyed in a direction parallel to a first direction. The electrode plate cutting line is located within the electrode plate cutting area and is parallel to a second direction. The first direction intersects the second direction. The first laser cutting assembly includes a first laser galvanometer. A center point of the first laser galvanometer is located above the electrode plate cutting line.

The second laser cutting assembly is configured to perform reciprocating cutting, along a predetermined tab cutting line, on the tab foil material conveyed to the tab cutting area of the electrode plate die-cutting device to form a tab. The tab cutting line is located at a boundary between the electrode plate cutting area and the tab cutting area and is parallel to the first direction. The second laser cutting assembly includes a second laser galvanometer. A center point of the second laser galvanometer is located above the tab cutting area.

### Beneficial effects

In the present invention, the electrode plate die-cutting method includes: conveying an electrode plate material strip in a first direction to a cutting area of an electrode plate die-cutting device, enabling an electrode plate material of the electrode plate material strip to be directly opposite to an electrode plate cutting area of the cutting area and a tab foil material of the electrode plate material strip to be directly opposite to a tab cutting area of the cutting area; adjusting, based on the electrode plate material strip, a position of each of a first laser cutting assembly and a second laser cutting assembly of the electrode plate die-cutting device to position a center point of a first laser galvanometer of the first laser cutting assembly above a predetermined electrode plate cutting line and to position a center point of a second laser galvanometer of the second laser cutting assembly above a side of the tab cutting line away from the electrode plate cutting area; and performing, by using the first laser cutting assembly, reciprocating cutting on the electrode plate material along the electrode plate cutting line to form an electrode plate, and performing, by using the second laser cutting assembly, reciprocating cutting on the tab foil material along a tab cutting line to form a tab. By placing the first laser galvanometer of the first laser cutting assembly above the electrode plate cutting line and the second laser galvanometer of the second laser cutting assembly above the tab cutting area, a laser incident cutting angle of each of the first laser cutting assembly and the second laser cutting assembly is increased. In this way, the severe vaporization of the upper surface material of the tab foil material caused by repeated cutting of one position can be avoided. Thus, the problem of the foil exposure caused by the laser cutting can be solved, thereby reducing the risk of the short circuit after the electrode plates are assembled into the cell pack.

In the present invention, the electrode plate die-cutting device includes a first laser cutting assembly and a second laser cutting assembly. The first laser cutting assembly is configured to perform reciprocating cutting, along the electrode plate cutting line, on the electrode plate material conveyed to the electrode plate cutting area to form an electrode plate. The second laser cutting assembly is configured to perform reciprocating cutting, along the tab cutting line, on the tab foil material conveyed to the tab cutting area to form a tab. By placing the first laser galvanometer above the electrode plate cutting line and the second laser galvanometer of the second laser cutting assembly above the tab cutting area, the laser incident cutting angle of each of the first laser cutting assembly and the second laser cutting assembly is increased. In this way, the severe vaporization of the upper surface material of the tab foil material caused by the repeated cutting of one position can be avoided. Thus, the problem of the foil exposure caused by the laser cutting can be solved, thereby reducing the risk of the short circuit after the electrode plates are assembled into the cell pack.

### BRIEF DESCRIPTION OF THE DRAWINGS

FIG. 1 is a flowchart of an electrode plate die-cutting method according to an embodiment of the present invention.
FIG. 2 is a specific flowchart of an electrode plate die-cutting method according to an embodiment of the present invention.
FIG. 3 is a schematic structural view of an electrode plate die-cutting device.
FIG. 4 is a top view of an electrode plate die-cutting device.
FIG. 5 is a side view of an electrode plate die-cutting device.
FIG. 6 is a top view of another electrode plate die-cutting device.
FIG. 7 is a front view of another electrode plate die-cutting device.
FIG. 8 is a schematic structural view of a first laser cutting assembly and a first drive assembly.

Names of the components corresponding to reference numbers in the figures: 1-electrode plate material strip, 11-electrode plate material, 12-tab foil material, 2-electrode plate die-cutting device, 21-first laser assembly, 211-first laser galvanometer, 22-second laser cutting assembly, 221-second laser galvanometer, L1-electrode plate cutting line, L2-tab cutting line, L3-electrode plate centerline, 3-roller, 4-tab flattening member, 5-control assembly, 6-first drive assembly, 61-servo driver, 62-servo motor, 63-lead screw, 64-fixing member.

### DETAILED DESCRIPTION OF THE EMBODIMENTS

In the description of the present invention, unless specified or limited otherwise, terms "connected", "coupled" and "fixed" are understood broadly, such as fixed, detachable mountings, connections and couplings or integrated, and may be mechanical or electrical mountings, connections and couplings, and also may be direct and via media indirect mountings, connections, and couplings, and further may be inner mountings, connections and couplings of two components or interaction relations between two components.

In the description of the present invention, unless specified or limited otherwise, a first characteristic being "on" or "under" a second characteristic may encompass cases where the first characteristic is in direct-contact with the second characteristic or is in contact with the second characteristic via another characteristic. Further, the first characteristic being "on", "above", "over" the second characteristic may encompass cases where the first characteristic is directly vertically over the second characteristic or is diagonally above the second characteristic, or just the horizontal height of the first characteristic is greater than the horizontal height of the second characteristic. The first characteristic being "below" or "under" the second characteristic may encompass cases where the first characteristic is directly vertically beneath the second characteristic or is diagonally under the second characteristic, or just the first characteristic is at a level lower than that of the second characteristic.

In the description of the present invention, terms such as "over", "below" and "right" is based on the orientation or position relationship shown in the drawings, and is only for the convenience of description and simplification of operation, rather than indicating or implying that the associated device or element must have a specific orientation, or be constructed and operated in a specific orientation, and therefore cannot be understood as a limitation on the present invention. In addition, terms "first" and "second" are merely used for distinction in description and have no special meanings.

Technical solutions of the present invention are further described below with reference to the accompanying drawings and through specific embodiments.

Embodiments of the present invention provide an electrode plate die-cutting method for cutting an electrode plate material strip.

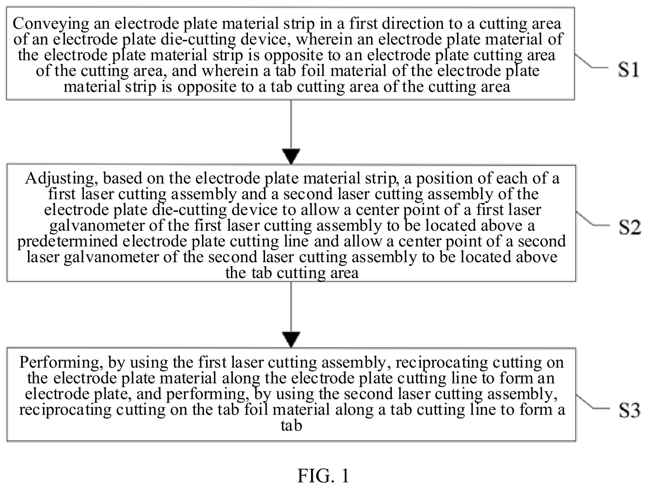

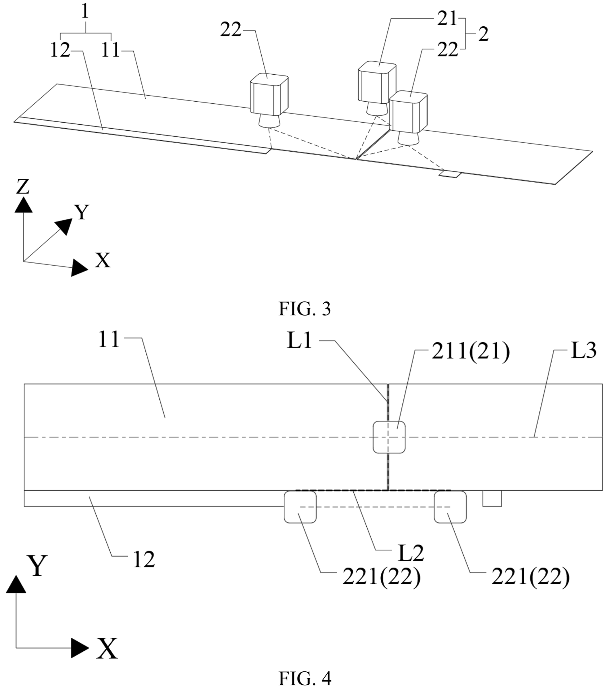

Referring to FIGS. 1 and 3, FIG. 1 is a flowchart of an electrode plate die-cutting method according to an embodiment of the present invention, and FIG. 3 is a schematic structural view of an electrode plate die-cutting device. An electrode plate material strip 1 includes an electrode plate material 11 and a tab foil material 12. The electrode plate material 11 includes one layer of metallic foil and two layers of substrates. The metallic foil is sandwiched between the two layers of substrates. The tab foil material 12 has only one layer of metallic foil. The metallic foil of the tab foil material 12 and the metallic foil of the electrode plate material 11 may be different parts of the same metallic foil, with an only difference being that an upper surface and a lower surface of the metallic foil of the tab foil material 12 are not covered by the substrate.

The electrode plate die-cutting device 2 has an electrode plate cutting area and a tab cutting area. The electrode plate die-cutting device 2 includes a first laser cutting assembly 21 and a second laser cutting assembly 22.

The electrode plate die-cutting method includes actions at blocks S1 to S3.

At block S1, an electrode plate material strip 1 is conveyed in a first direction X to a cutting area of an electrode plate die-cutting device 2, enabling an electrode plate material 11 of the electrode plate material strip 1 to be opposite to an electrode plate cutting area of the cutting area and a tab foil material 12 of the electrode plate material strip 1 to be opposite to a tab cutting area of the cutting area.

At block S2, a position of each of a first laser cutting assembly 21 and a second laser cutting assembly 22 of the electrode plate die-cutting device 2 is adjusted based on the electrode plate material strip 1 to position a center point of a first laser galvanometer 211 of the first laser cutting assembly 21 above a predetermined electrode plate cutting line L1 and position a center point of a second laser galvanometer 221 of the second laser cutting assembly 22 above the tab cutting area.

At block S3, reciprocating cutting is performed on the electrode plate material 11 along the electrode plate cutting line L1 by using the first laser cutting assembly 21 to form an electrode plate, and reciprocating cutting is performed on the tab foil material 12 along a tab cutting line L2 by using the second laser cutting assembly 22 to form a tab.

It should be noted that when the electrode plate material 11 is conveyed to the electrode plate die-cutting device by a conveying device, the electrode plate cutting area is configured to bear the electrode plate material 11, and the tab cutting area is configured to bear the tab foil material 12. Since the electrode plate cutting area is opposite to the electrode plate material 11, and the tab cutting area is opposite to the tab foil material 12, FIG. 1 does not illustrate the electrode plate cutting area and the tab cutting area. An area where the electrode plate material 11 is located may be regarded as the electrode plate cutting area, and an area where the tab foil material 12 is located may be regarded as the tab cutting area.

In this embodiment, the electrode plate cutting line L1 is parallel to a second direction Y; the tab cutting line L2 is parallel to the first direction X; and the first direction X intersects the second direction Y.

In this embodiment, the first direction X is perpendicular to the second direction Y. In some other embodiments, the first direction X and the second direction Y may intersect but not be perpendicular to each other. For example, an angle between the first direction X and the second direction Y is, but not limited to, any one of 30 degrees, 45 degrees, or 60 degrees.

The electrode plate cutting line L1 may be regarded as a laser path of the first laser cutting assembly 21 for cutting the electrode plate material 11. The electrode plate cutting line L1 is located in the electrode plate cutting area. The first laser cutting assembly 21 may cut the electrode plate material 11 along the electrode plate cutting line L1 to form the electrode plate. The tab cutting line L2 may be regarded as a laser path of the second laser cutting assembly 22 for cutting the tab foil material 12. The tab cutting line L2 is located at a boundary of the electrode plate cutting area and the tab cutting area. The second laser cutting assembly 22 may cut an excess part of the tab foil material 12 along the tab cutting line L2 to form the tab.

As shown in FIG. 4, FIG. 4 is a top view of an electrode plate die-cutting device. Subsequent to said adjusting the position of the first laser cutting assembly 21, a center point of the first laser galvanometer 211 is located above the electrode plate cutting line L1. That is, an orthogonal projection of the center point of the first laser galvanometer 211 in the third direction Z falls on the electrode plate cutting line L1. The third direction Z is perpendicular to the first direction X and the second direction Y, and a connection line between the center point of the first laser galvanometer 211 and the electrode plate cutting line L1 is perpendicular to the first direction X. By placing the center point of the first laser galvanometer 211 directly above the electrode plate cutting line L1, a laser incident cutting angle of the first laser galvanometer 211 when cutting the electrode plate material 11 can be 90 degrees, thereby ensuring that upper substrates of two electrode plates at two sides of the electrode plate cutting line L1 have a consistent degree of vaporization in the cutting area.

It should be noted that in this embodiment, the center point of the first laser galvanometer 211 refers to a geometric center point of the first laser galvanometer 211, i.e., a laser emission center of the first laser galvanometer 211. The same applies to a center point of the second laser galvanometer 221, which is not repeated herein.

In one embodiment, the position of each of the first laser cutting assembly and the second laser cutting assembly may be manually adjusted to position the center point of the first laser galvanometer 211 above the electrode plate cutting line L1 and position the center point of the second laser galvanometer 221 above the tab cutting area.

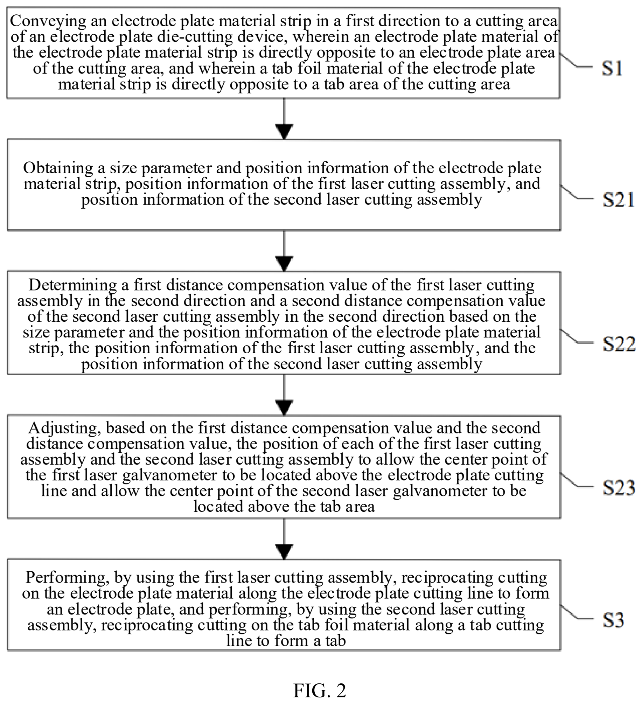

In one embodiment, the electrode plate die-cutting device used in the electrode plate die-cutting method according to the embodiments of the present invention can automatically adjust the position of each of the first laser cutting assembly and the second laser cutting assembly. Referring to FIG. 2, FIG. 2 is a specific flowchart of an electrode plate die-cutting method according to an embodiment of the present invention. The action of adjusting, based on the electrode plate material strip, the position of each of the first laser cutting assembly and the second laser cutting assembly of the electrode plate die-cutting device includes actions at blocks S21 to S23.

At block S21, a dimensional parameter and position information of the electrode plate material strip 1, position information of the first laser cutting assembly 21, and position information of the second laser cutting assembly 22 are obtained.

At block S22, a first distance compensation value of the first laser cutting assembly 21 in the second direction Y and a second distance compensation value of the second laser cutting assembly 22 in the second direction Y are determined based on the dimensional parameter and the position information of the electrode plate material strip 1, the position information of the first laser cutting assembly 21, and the position information of the second laser cutting assembly 22.

At block S23, the position of each of the first laser cutting assembly 21 and the second laser cutting assembly 22 are adjusted based on the first distance compensation value and the second distance compensation value to position the center point of the first laser galvanometer 211 above the electrode plate cutting line L1 and position the center point of the second laser galvanometer 221 above the tab cutting area.

In some embodiments, the dimensional parameter of the electrode plate material strip 1 includes a width of the electrode plate material 11 in the second direction. The width of the electrode plate material 11 in the second direction Y is a length of the electrode plate cutting line L1. Coordinates of the electrode plate cutting line L1, coordinates of a midpoint of the electrode plate cutting line L1, and coordinates of the tab cutting line L2 can be determined based on the width of the electrode plate material 11 in the second direction Y and the position information of the electrode plate material strip. The position information of the first laser cutting assembly 21 is coordinates of the center point of the first laser galvanometer 211, and the position information of the second laser cutting assembly 22 is coordinates of the center point of the second laser galvanometer 221.

It can be determined, based on the coordinates of the electrode plate cutting line L1 and the coordinates of the center point of the first laser galvanometer 211, whether the center point of the first laser galvanometer 211 is located directly above the electrode plate cutting line L1. In response to determining that the center point of the first laser galvanometer 211 is not directly above the electrode plate cutting line L1, the first distance compensation value of the first laser cutting assembly 21 in the second direction Y can be calculated based on the coordinates of the electrode plate cutting line L1 and the coordinates of the center point of the first laser galvanometer 211. It can be determined, based on the coordinates of the tab cutting line L2 and the coordinates of the center point of the second laser galvanometer 221, whether the center point of the second laser galvanometer 221 is located above the tab cutting area. In response to determining that the center point of the second laser galvanometer 221 is not above the tab cutting area, the second distance compensation value of the second laser cutting assembly 22 in the second direction Y can be calculated based on the coordinates of the tab cutting line L2 and the coordinates of the center point of the second laser galvanometer 221.

In this embodiment, the electrode plate material strip is cut by the first laser cutting assembly 21 and the second laser cutting assembly 22 simultaneously. In this way, cutting efficiency of the electrode plate die-cutting device can be improved. In some other embodiments, the electrode plate material strip may also be cut by the first laser cutting assembly 21 and the second laser cutting assembly 22 successively, and no unique limitation is imposed herein. In an embodiment, the action of adjusting the position of the first laser cutting assembly 21 based on the electrode plate material strip 1 includes: determining coordinates of a midpoint of the electrode plate cutting line L1 and coordinates of the center point of the first laser galvanometer 211 based on the dimensional parameter and the position information of the electrode plate material strip 1 and the position information of the first laser cutting assembly 21; determining the first distance compensation value of the first laser cutting assembly 21 based on the coordinates of the midpoint of the electrode plate cutting line L1 and the coordinates of the center point of the first laser galvanometer 211; and adjusting the position of the first laser cutting assembly 21 based on the first distance compensation value to allow the center point of the first laser galvanometer 211 to coincide with the midpoint of the electrode plate cutting line L1 in a third direction Z. The third direction Z is perpendicular to the first direction X and the second direction Y.

It should be noted that the center point of the first laser galvanometer 211 coincides with the midpoint of the electrode plate cutting line L1 in the third direction Z, that is, the center point of the first laser galvanometer 211 is located directly above the midpoint of the electrode plate cutting line L1. The electrode plate material 11 is symmetrical about an electrode plate centerline L3 passing through the midpoint of the electrode plate cutting line L1. Since an effective cutting range of the first laser galvanometer 211 is symmetrical about the center point of the first laser galvanometer 211, by placing the center point of the first laser galvanometer 211 to be located directly above the midpoint of the electrode plate cutting line L1, it can be ensured that upper substrates of electrode plates on two sides of the electrode plate centerline L3 have a consistent degree of vaporization in the cutting area.

As shown in FIG. 4, the center point of the second laser galvanometer 221 is located above the tab cutting area, and an orthogonal projection of the center point of the second laser galvanometer 221 in the third direction Z is located within the tab cutting area.

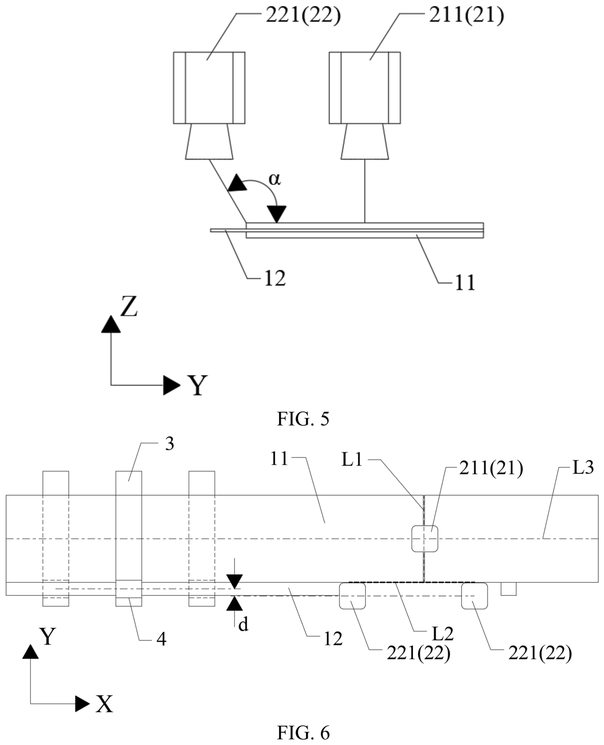

Referring to FIGS. 4 and 5, FIG. 5 is a side view of an electrode plate die-cutting device. After the position of the second laser cutting assembly 22 is adjusted, a first angle α between a surface of the electrode plate material 11 adjacent to the first laser galvanometer 211 and a connection line between the center point of the second laser galvanometer 221 and the tab cutting line L2 is greater than 90 degrees. The first angle α is a laser incident cutting angle of the second laser cutting assembly 22, which is equivalent to increasing the laser incident cutting angle of the second laser cutting assembly 22, reducing vaporization of an upper substrate of the electrode plate material 11 caused by repeated cutting. Thus, a problem of foil exposure can be solved, thereby reducing a risk of short circuit after the electrode plates are assembled into a cell pack.

In an embodiment, the action of adjusting the position of the second laser cutting assembly 22 based on the electrode plate material strip 1 includes: determining a distance between the center point of the second laser galvanometer 221 and the tab cutting line L2 in the second direction based on the dimensional parameter and the position information of the electrode plate material strip 1 and the position information of the second laser cutting assembly 22; determining a first angle between a surface of the electrode plate material 11 adjacent to the first laser galvanometer 211 and a connection line between the center point of the second laser galvanometer 221 and the tab cutting line L2; determining, in response to determining that the first angle is less than or equal to 90 degrees or greater than 150 degrees, the second distance compensation value of the second laser cutting assembly 22 based on the distance between the center point of the second laser galvanometer 221 and the tab cutting line L2 in the second direction and a height of the second laser galvanometer 221; and adjusting the position of the second laser cutting assembly 22 based on the second distance compensation value to allow the first angle to be greater than 90 degrees and less than or equal to 150 degrees.

In this embodiment, subsequent to said adjusting the position of the second laser cutting assembly 22, the first angle α between the connection line, between the center point of the second laser galvanometer 221 and the tab cutting line L2, and the surface of the electrode plate material 11 adjacent to the first laser galvanometer 211 may be, but is not limited to, 91 degrees, 95 degrees, 100 degrees, 120 degrees, 135 degrees, or 150 degrees. Preferably, the first angle α should be greater than 90 degrees and less than or equal to 150 degrees. In this way, it can be ensured that while increasing the laser incident cutting angle of the second laser cutting assembly 22, foil exposure on the back of the electrode plate is avoided due to an excessively large laser incident cutting angle of the second laser cutting assembly 22.

Further, in the action of performing, by using the first laser cutting assembly, the reciprocating cutting on the electrode plate material along the electrode plate cutting line to form the electrode plate, and performing, by using the second laser cutting assembly, the reciprocating cutting on the tab foil material along the tab cutting line to form the tab, the electrode plate material strip is cut by using at least one laser cutting assembly unit. Each of the at least one laser cutting assembly unit includes one first laser cutting assembly 21 and two second laser cutting assemblies 22. The first laser cutting assembly 21 is disposed between the two second laser cutting assemblies 22. The two second laser cutting assemblies 22 in one of the at least one laser cutting assembly unit are respectively configured to cut tab foil materials at two adjacent sides of the tab.

In this embodiment, as shown in FIG. 4, the electrode plate die-cutting device includes a laser cutting assembly unit. The laser cutting assembly unit includes one first laser cutting assembly 21 and two second laser cutting assemblies 22. The first laser cutting assembly 21 is disposed between the two second laser cutting assemblies 22, and a connection line between the center points of second laser galvanometers 221 of the two second laser cutting assemblies 22 is parallel to the first direction X.

The first laser cutting assembly 21 is configured to cut the electrode plate material 11 along the electrode plate cutting line L1. One of the two second laser cutting assemblies 22 is configured to cut a tab foil material 12 at a left side of the tab along a corresponding tab cutting line, and another one of the two second laser cutting assemblies 22 is configured to cut a tab foil material 12 at a right side of the tab along a corresponding tab cutting line. In this way, by increasing the number of second laser cutting assemblies 22, the tab foil materials at the two sides of the tab can be cut simultaneously, which can improve the cutting efficiency of the electrode plate die-cutting device.

In an embodiment, the electrode plate material strip is cut by using a plurality of laser cutting assembly units. The number of laser cutting assembly units may be two, three or more, and the plurality of laser cutting assembly units may be arranged side by side at intervals in the first direction X.

Further, the electrode plate die-cutting method further includes: adjusting center points of a plurality of second laser galvanometers 221 to be located on one straight line.

In an embodiment, subsequent to the completion of the adjustment of the positions of the plurality of second laser galvanometers 221, a connection line between the center points of the second laser galvanometers 221 of the plurality of second laser cutting assemblies 22 is parallel to the first direction X and the tab cutting line L2. In this way, it can be ensured that a plurality of different second laser cutting assemblies 22 exert a consistent cutting effect.

Further, the first laser cutting assembly 21 includes a first laser that corresponds to and cooperates with the first laser galvanometer 211, and the second laser cutting assembly 22 includes a second laser that corresponds to and cooperates with the second laser galvanometer 221. Each of the first laser and the second laser is a picosecond laser.

Further, the power of the first laser is greater than or equal to 5 megawatts and less than or equal to 10 megawatts, and the power of the second laser is greater than or equal to 5 megawatts and less than or equal to 10 megawatts.

In an embodiment, the power of each of the first laser and the second laser may be, but is not limited to, 5 megawatts, 6 megawatts, 8 megawatts, or 10 megawatts, etc. As long as the power of each of the first laser and the second laser ranges from 5 megawatts to 10 megawatts, it can be ensured that the first laser cutting assembly and the second laser cutting assembly can cut through the electrode plate material strip. In practical applications, the power of the first laser may be equal or unequal to the power of the second laser, which is not limited herein.

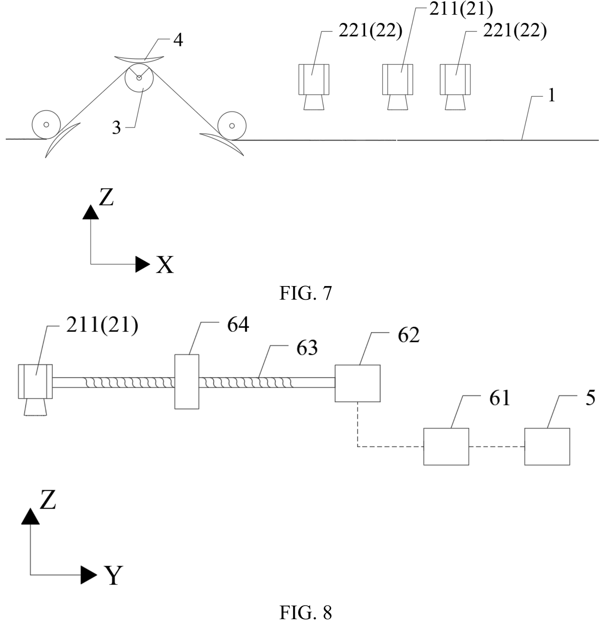

Referring to FIGS. 6 and 7, FIG. 6 is a top view of another electrode plate die-cutting device, and FIG. 7 is a front view of another electrode plate die-cutting device according to an embodiment of the present invention. The structure of the electrode plate die-cutting device in FIGS. 6 and 7 is roughly the same as that of the electrode plate die-cutting device illustrated in FIG. 3, with a difference being that the electrode plate die-cutting device further includes a plurality of conveying members 3 and a plurality of tab flattening members 4. Each of the plurality of tab flattening members 4 is disposed adjacent to an outer peripheral surface of an end of the conveying member 3. Each of the plurality of tab flattening members 4 may be located above or below the conveying member 3. The electrode plate material 11 is partially attached to an outer peripheral surface of the conveying member 3, and the tab foil material 12 passes through a gap between the tab flattening member 4 and the conveying member 3. The tab flattening member 4 can flatten a curled tab foil material 12.

It should be noted that FIG. 6 only illustrates a relative positional relationship between the conveying member 3, the tab flattening member 4, the first laser cutting assembly 21, the second laser cutting assembly 22, and the electrode plate material strip, and does not represent the number of rollers 3 and the number of tab flattening members 4 in practical applications.

In this embodiment, the conveying member 3 is a roller, which is cylindrical, and the electrode plate material 11 is partially attached to an outer circumferential surface of the roller. Driven by a drive roller (not shown in the figure), the electrode plate material strip 1 can move in the first direction X, and the roller can rotate as the electrode plate material strip 1 moves. A projection of a connection line between the center point of the first laser galvanometer 211 and a midpoint of a centerline of the roller in the third direction X is parallel to the first direction X.

In one embodiment, the position of the first laser cutting assembly 21 may be adjusted based on a position of the conveying member 3. The action of adjusting the position of the first laser cutting assembly based on the electrode plate material strip includes: determining, based on position information of the conveying member 3 and position information of the first laser cutting assembly 21, whether an orthogonal projection of a connection line between the center point of the first laser galvanometer 211 and a center point of the conveying member 3 in a third direction Z is parallel to the first direction X; in response to determining that the orthogonal projection of the connection line between the center point of the first laser galvanometer 211 and the center point of the conveying member 3 in the third direction Z is not parallel to the first direction X, determining a first distance compensation value of the first laser cutting assembly 21 in the second direction Y based on the position information of the conveying member 3 and the position information of the first laser cutting assembly 21; and adjusting the position of the first laser cutting assembly 21 based on the first distance compensation value to allow the orthogonal projection of the connection line between the center point of the first laser galvanometer 211 and the center point of the conveying member 3 in the third direction Z to be parallel to the first direction X. Similarly, the first laser cutting assembly 21 can be adjusted to a position that meets the cutting condition.

In one embodiment, the position of the second laser cutting assembly 22 can be adjusted based on a position of the tab flattening member 4. The action of adjusting the position of the second laser cutting assembly 22 based on the electrode plate material strip includes: determining, based on position information of the tab flattening member 4 and position information of the second laser cutting assembly 22, whether a projection of a connection line between the center point of the second laser galvanometer 221 and a center point of the tab flattening member 4 in the third direction Z is parallel to the first direction X or whether the center point of the second laser galvanometer 221 is located within a predetermined distance range on a side of the center point of the tab flattening member 4 away from the electrode plate cutting area; in response to determining that the position of the center point of the second laser galvanometer 221 satisfies either of the above two conditions, determining that the position of the center point of the second laser galvanometer 221 meets the cutting conditions, and no adjustment to the position of the second laser cutting assembly 22 is required; and in response to determining that the projection of the connection line between the center point of the second laser galvanometer 221 and the center point of the tab flattening member 4 in the third direction Z is not parallel to the first direction X and that the center point of the second laser galvanometer 221 is not located within the predetermined distance range on the side of the center point of the tab flattening member 4 away from the electrode plate cutting area, i.e., that the position of the center point of the second laser galvanometer 221 does not satisfy the above two conditions, determining a second distance compensation value of the second laser cutting assembly 22 in the second direction Y based on the position information of the tab flattening member 4 and the position information of the second laser cutting assembly 22; and adjusting the position of the second laser cutting assembly 22 based on the second distance compensation value to allow the projection of the connection line between the center point of the second laser galvanometer 221 and the center point of the tab flattening member 4 in the third direction Z to be parallel to the first direction X or allow the center point of the second laser galvanometer 221 to be located within the predetermined distance range on the side of the center point of the tab flattening member 4 away from the electrode plate cutting area. The second laser cutting assembly 22 can be adjusted to a position that meets the cutting conditions as long as either of the above two conditions is satisfied.

It should be noted that the projection of the connection line between the center point of the second laser galvanometer 221 and the center point of the tab flattening member 4 in the third direction Z is parallel to the first direction X, that is, the center point of the second laser galvanometer 221 is aligned with the center points of the plurality of tab flattening members 4 in the first direction X.

Further, the predetermined distance range is greater than or equal to 0 millimeter and less than or equal to 10 millimeters.

For example, a distance d between the center point of the second laser galvanometer 221 and the center point of the tab flattening member 4 in the second direction Y may be, but is not limited to any value such as 0 mm, 2 mm, 4 mm, 6 mm, 8 mm, or 10 mm, as long as it ranges from 0 mm to 10 mm. In this way, it can be ensured that the laser incident cutting angle of the second laser galvanometer 221 is greater than 90 degrees.

In this embodiment, the electrode plate die-cutting device further includes a camera assembly, a control assembly 5, a first drive assembly 6, and a second drive assembly. The camera assembly is configured to obtain a dimensional parameter and position information of the electrode plate material strip, position information of the first laser cutting assembly, and position information of the second laser cutting assembly.

In an embodiment, the camera assembly is a Charge-Coupled Device (CCD) camera. When the electrode plate material strip is conveyed to the cutting area, both a conveying mechanism and the electrode plate material strip stop moving. The CCD camera is used to take pictures of the electrode plate material strip, the first laser cutting assembly, and the second laser cutting assembly. The dimensional parameter of the electrode plate material strip, the position information of the first laser cutting assembly, and the position information of the second laser cutting assembly can be obtained based on the pictures.

In this embodiment, the dimensional parameter of the electrode plate material strip 1 is a width of the electrode plate material 11 in the second direction Y. The width of the electrode plate material 11 in the second direction Y is a length of the electrode plate cutting line L1. Coordinates of the electrode plate cutting line L1 and coordinates of a midpoint of the electrode plate cutting line L1 can be determined based on the width of the electrode plate material 11 in the second direction Y and the position information of the electrode plate material 11. The position information of the first laser cutting assembly refers to coordinates of a center point of the first laser galvanometer, and the position information of the second laser cutting assembly refers to coordinates of a center point of the second laser galvanometer.

In this embodiment, the control assembly is in communication connection with the camera assembly. The control assembly is configured to determine a first distance compensation value of the first laser cutting assembly in the second direction and a second distance compensation value of the second laser cutting assembly in the second direction based on the dimensional parameter and the position information of the electrode plate material strip, the position information of the first laser cutting assembly, and the position information of the second laser cutting assembly. In an embodiment, the control assembly may be a computer.

The first drive assembly 6 is in communication connection with the control assembly 5 and connected to the first laser cutting assembly 21. The first drive assembly 6 is configured to drive, based on the first distance compensation value, the first laser cutting assembly 21 to move in the second direction Y to a position directly above the electrode plate cutting line L1. The second drive assembly (not shown in the figure) is in communication connection with the control assembly and connected to the second laser cutting assembly 22. The second drive assembly is configured to drive, based on the second distance compensation value, the second laser cutting assembly 22 to move in the second direction Y to a position above the tab cutting area.

In one embodiment, as shown in FIG. 8, FIG. 8 is a schematic structural view of a first laser cutting assembly and a first drive assembly. The first drive assembly 6 is taken as an example for illustration. The first drive assembly 6 includes a servo driver 61, a servo motor 62, and a lead screw 63. The servo driver 61 is in communication connection with the control assembly 5 and the servo motor 62. The lead screw 63 is drivingly connected to the servo motor 62. The lead screw 63 penetrates a fixing member 64 and is threadedly connected to the fixing member 64. The fixing member 64 may be a lead screw fixing rod. The lead screw 63 is rotatably connected to the first laser cutting assembly 21.

The control assembly 5 is configured to send the first distance compensation value to the servo driver 61. The servo driver 61 is configured to control the servo motor 62 to operate to drive the lead screw 63 to rotate. The first laser cutting assembly 21 is driven by the lead screw 63 to move in the second direction Y to the position directly above the electrode plate cutting line L1. A structure and an operating principle of the second drive assembly are the same as those of the first drive assembly, which is not repeated herein.

The present invention has beneficial effects as follows. In the present invention, the electrode plate die-cutting method includes: conveying an electrode plate material strip in a first direction to a cutting area of an electrode plate die-cutting device, enabling an electrode plate material of the electrode plate material strip to be directly opposite to an electrode plate cutting area of the cutting area and a tab foil material of the electrode plate material strip to be directly opposite to a tab cutting area of the cutting area; adjusting, based on the electrode plate material strip, a position of each of a first laser cutting assembly and a second laser cutting assembly of the electrode plate die-cutting device to position a center point of a first laser galvanometer of the first laser cutting assembly above a predetermined electrode plate cutting line and position a center point of a second laser galvanometer of the second laser cutting assembly above a side of the tab cutting line away from the electrode plate cutting area; and performing, by using the first laser cutting assembly, reciprocating cutting on the electrode plate material along the electrode plate cutting line to form an electrode plate, and performing, by using the second laser cutting assembly, reciprocating cutting on the tab foil material along a tab cutting line to form a tab. By placing the first laser galvanometer of the first laser cutting assembly above the electrode plate cutting line and the second laser galvanometer of the second laser cutting assembly above the tab cutting area, the laser incident cutting angle of each of the first laser cutting assembly and the second laser cutting assembly is increased. In this way, severe vaporization of an upper surface material of the tab foil material caused by repeated cutting of one position can be avoided. Thus, the problem of the foil exposure caused by the laser cutting can be solved, thereby reducing the risk of the short circuit after the electrode plates are assembled into the cell pack.

Embodiments of the present invention provide an electrode plate die-cutting device. The electrode plate die-cutting device is configured to cut an electrode plate material strip.

Referring to FIG. 3, an electrode plate material strip 1 includes an electrode plate material 11 and a tab foil material 12. The electrode plate material 11 includes one layer of metallic foil and two layers of substrates. The metallic foil is sandwiched between the two layers of the substrates. The tab foil material 12 has only one layer of metallic foil. The metallic foil of the tab foil material 12 and the metallic foil of the electrode plate material 11 may be different parts of the same metallic foil, with an only difference being that an upper surface and a lower surface of the metallic foil of the tab foil material 12 are not covered by the substrate.

The electrode plate die-cutting device 2 has an electrode plate cutting area and a tab cutting area. The electrode plate cutting area is opposite to the electrode plate material 11, and the tab cutting area is opposite to the tab foil material 12. When the electrode plate material 11 is conveyed to the electrode plate die-cutting device by the conveying device, the electrode plate cutting area is configured to bear the electrode plate material 11, and the tab cutting area is configured to bear the tab foil material 12.

It should be noted that since the electrode plate cutting area is directly opposite the electrode plate material 11, and the tab cutting area is directly opposite the tab foil material 12, FIG. 1 does not illustrate the electrode plate cutting area and the tab cutting area. An area where the electrode plate material 11 is located may be regarded as the electrode plate cutting area, and an area where the tab foil material 12 is located may be regarded as the tab cutting area.

As shown in FIGS. 3 and 4, the electrode plate die-cutting device includes a first laser cutting assembly 21 and a second laser cutting assembly 22. The first laser cutting assembly 21 is configured to perform reciprocating cutting, along a predetermined electrode plate cutting line, on the electrode plate material 11 conveyed to the electrode plate cutting area L1 to form an electrode plate. The second laser cutting assembly 22 is configured to perform reciprocating cutting, along a predetermined tab cutting line L2, on the tab foil material 12 conveyed to the tab cutting area to form a tab.

A conveying direction of the electrode plate material strip 1 is parallel to a first direction X; the electrode plate cutting line L1 is parallel to a second direction Y; the tab cutting line L2 is parallel to the first direction X; and the first direction X intersects the second direction Y. In this embodiment, the first direction X is perpendicular to the second direction Y. In some other embodiments, the first direction X and the second direction Y may intersect but not be perpendicular to each other. For example, an angle between the first direction X and the second direction Y may be, but not limited to, any one of 30 degrees, 45 degrees, or 60 degrees.

The electrode plate cutting line L1 may be regarded as a laser path of the first laser cutting assembly 21 for cutting the electrode plate material 11. The electrode plate cutting line L1 is located in the electrode plate cutting area. The first laser cutting assembly 21 may cut the electrode plate material 11 along the electrode plate cutting line L1 to form the electrode plate. The tab cutting line L2 may be regarded as a laser path of the second laser cutting assembly 22 for cutting the tab foil material 12. The tab cutting line L2 is located at a boundary of the electrode plate cutting area and the tab cutting area. The second laser cutting assembly 22 may cut an excess part of the tab foil material 12 along the tab cutting line L2 to form the tab. Both the electrode plate cutting line L1 and the tab cutting line L2 may be predetermined by the electrode plate die-cutting device and stored in the electrode plate die-cutting device. When the electrode plate cutting is required, the corresponding predetermined electrode plate cutting line and tab cutting line can be selected according to different electrode plates.

Further, the first laser cutting assembly 21 includes a first laser galvanometer 211, and a center point of the first laser galvanometer 211 is located above the electrode plate cutting line L1.

As shown in FIG. 4, the center point of the first laser galvanometer 211 is located above the electrode plate cutting line L1. That is, an orthogonal projection of the center point of the first laser galvanometer 211 in a third direction Z falls on the electrode plate cutting line L1. The third direction Z is perpendicular to the first direction X and the second direction Y, and a connection line between the center point of the first laser galvanometer 211 and the electrode plate cutting line L1 is perpendicular to the first direction X. By placing the center point of the first laser galvanometer 211 above the electrode plate cutting line L1, a laser incident cutting angle of the first laser galvanometer 211 when cutting the electrode plate material 11 can be 90 degrees, thereby ensuring that upper substrates of two electrode plates at two sides of the electrode plate cutting line L1 have a consistent degree of vaporization in the cutting area.

In an embodiment, the center point of the first laser galvanometer 211 coincides with a midpoint of the electrode plate cutting line L1 in the third direction Z, that is, the center point of the first laser galvanometer 211 is located above the midpoint of the electrode plate cutting line L1. The electrode plate material 11 is symmetrical about an electrode plate centerline L3 passing through the midpoint of the electrode plate cutting line L1. Since an effective cutting range of the first laser galvanometer 211 is symmetrical about the center point of the first laser galvanometer 211, by placing the center point of the first laser galvanometer 211 above the midpoint of the electrode plate cutting line L1, it can be ensured that upper substrates of electrode plates on two sides of the electrode plate centerline L3 have a consistent degree of vaporization in the cutting area.

Further, the second laser cutting assembly 22 includes a second laser galvanometer 221, and a center point of the second laser galvanometer 221 is located above the tab cutting area.

As shown in FIG. 4, the center point of the second laser galvanometer 221 is located above the tab cutting area, and an orthogonal projection of the center point of the second laser galvanometer 221 in the third direction Z is located within the tab cutting area.

As shown in FIGS. 4 and 5, an angle α between a surface of the electrode plate material 11 adjacent to the first laser galvanometer 211 and a connection line between the center point of the second laser galvanometer 221 and the tab cutting line L2 is greater than 90 degrees. The angle between the surface of the electrode plate material 11 adjacent to the first laser galvanometer 211 and the connection line between the center point of the second laser galvanometer 221 and the tab cutting line L2 is a laser incident cutting angle of the second laser cutting assembly 22, which is equivalent to increasing the laser incident cutting angle of the second laser cutting assembly 22, reducing vaporization of an upper substrate of the electrode plate material 11 caused by repeated cutting. Thus, the problem of the foil exposure can be solved, thereby reducing the risk of the short circuit after the electrode plates are assembled into the cell pack.

In an embodiment, the angle α between the connection line, between the center point of the second laser galvanometer 221 and the tab cutting line L2, and the surface of the electrode plate material 11 adjacent to the first laser galvanometer 211 may be, but is not limited to, 91 degrees, 95 degrees, 100 degrees, 120 degrees, 135 degrees, or 150 degrees. Preferably, the angle α between the connection line between, the center point of the second laser galvanometer 221 and the tab cutting line L2, and the surface of the electrode plate material 11 adjacent to the first laser galvanometer 211 should be greater than 90 degrees and less than or equal to 150 degrees. In this way, it can be ensured that while increasing the laser incident cutting angle of the second laser cutting assembly 22, foil exposure on the back of the electrode plate is avoided due to an excessively large laser incident cutting angle of the second laser cutting assembly 22.

It should be noted that the center point of the first laser galvanometer 211 refers to a geometric center point of the first laser galvanometer 211, i.e., a laser emission center of the first laser galvanometer 211. The same applies to the center point of the second laser galvanometer 221, which is not repeated herein.

In this embodiment, the electrode plate material strip is cut by the first laser cutting assembly 21 and the second laser cutting assembly 22 simultaneously. In this way, cutting efficiency of the electrode plate die-cutting device can be improved. In some other embodiments, the electrode plate material strip may also be cut by the first laser cutting assembly 21 and the second laser cutting assembly 22 successively, and no unique limitation is imposed herein.

Further, the electrode plate die-cutting device includes at least one laser cutting assembly unit. Each of the at least one laser cutting assembly unit includes a first laser cutting assembly 21 and two second laser cutting assemblies 22. The first laser cutting assembly 21 is disposed between the two second laser cutting assemblies 22. The two second laser cutting assemblies 22 in one of the at least one laser cutting assembly unit are respectively configured to cut tab foil materials at two adjacent sides of the tab.

In this embodiment, as shown in FIG. 4, the electrode plate die-cutting device includes one laser cutting assembly unit that includes one first laser cutting assembly 21 and two second laser cutting assemblies 22. The first laser cutting assembly 21 is disposed between the two second laser cutting assemblies 22, and a connection line between center points of the second laser galvanometers 221 of the two second laser cutting assemblies 22 is parallel to the first direction X.

The first laser cutting assembly 21 is configured to cut the electrode plate material 11 along the electrode plate cutting line L1. One of the two second laser cutting assemblies 22 is configured to cut a tab foil material 12 at a left side of the tab along a corresponding tab cutting line, and another one of the two second laser cutting assemblies 22 is configured to cut a tab foil material 12 at a right side of the tab along a corresponding tab cutting line. In this way, by increasing the number of second laser cutting assemblies 22, the tab foil materials at the two sides of the tab can be cut simultaneously, which can improve the cutting efficiency of the electrode plate die-cutting device.

In some other embodiments, the number of laser cutting assembly units of the electrode plate die-cutting device is not limited to one in the above embodiments, but may also be two, three, or more, and a plurality of laser cutting assembly units may be arranged side by side at intervals in the first direction X. In such a configuration, the electrode plate die-cutting device may have a plurality of second laser cutting assemblies 22, and center points of second laser galvanometers 221 of the plurality of second laser cutting assemblies 22 are located on one straight line.

In an embodiment, a connection line between the center points of the second laser galvanometers 221 of the plurality of second laser cutting assemblies 22 is parallel to the first direction X and the tab cutting line L2, which can ensure that a plurality of different second laser cutting assemblies 22 exert a consistent cutting effect.

Further, the first laser cutting assembly 21 includes a first laser that corresponds to and cooperates with the first laser galvanometer 211, and the second laser cutting assembly 22 includes a second laser that corresponds to and cooperates with the second laser galvanometer 221. Each of the first laser and the second laser is a picosecond laser.

Further, the power of the first laser is greater than or equal to 5 megawatts and less than or equal to 10 megawatts, and the power of the second laser is greater than or equal to 5 megawatts and less than or equal to 10 megawatts.

In an embodiment, the power of each of the first laser and the second laser may be, but is not limited to, 5 megawatts, 6 megawatts, 8 megawatts, or 10 megawatts, etc. As long as the power of each of the first laser and the second laser ranges from 5 megawatts to 10 megawatts, it can be ensured that the first laser cutting assembly and the second laser cutting assembly can cut through the electrode plate material strip. In practical applications, the power of the first laser may be equal or unequal to the power of the second laser, which is not limited herein.

Referring to FIGS. 6 and 7, an electrode plate die-cutting device in FIGS. 6 and 7 has a structure roughly the same as that of the electrode plate die-cutting device illustrated in FIG. 3, with a difference being that the electrode plate die-cutting device further includes a plurality of conveying members 3 and a plurality of tab flattening members 4. Each of the plurality of tab flattening members 4 is disposed adjacent to an outer peripheral surface of an end of the conveying member 3. Each of the plurality of tab flattening members 4 may be located above or below the conveying member 3. The electrode plate material 11 is partially attached to an outer peripheral surface of the conveying member 3, and the tab foil material 12 passes through a gap between the tab flattening member 4 and the conveying member 3. The tab flattening member 4 can flatten a curled tab foil material 12.

It should be noted that FIG. 6 only illustrates a relative positional relationship between the conveying member 3, the tab flattening member 4, the first laser cutting assembly 21, the second laser cutting assembly 22, and the electrode plate material strip, and does not represent the number of rollers and the number of tab flattening members 4 in practical applications.

In this embodiment, the conveying member 3 is a roller, which is cylindrical, and the electrode plate material 11 is partially attached to an outer circumferential surface of the roller. Driven by a drive roller (not shown in the figure), the electrode plate material strip 1 can move in the first direction X, and the roller can rotate as the electrode plate material strip 1 moves. A projection of a connection line between the center point of the first laser galvanometer 211 and a midpoint of a centerline of the roller in the third direction X is parallel to the first direction X.

In one embodiment, a center point of the tab flattening member 4 is located within the tab cutting area, and a projection of a connection line between the center point of the second laser galvanometer 221 and the center point of the tab flattening member 4 in the third direction Z is parallel to the first direction X.

In one embodiment, as shown in FIG. 6, the center point of the second laser galvanometer 221 and the center point of the tab flattening member 4 are away from a side of the electrode plate cutting area.

Further, a distance d between the center point of the second laser galvanometer 221 and the center point of the tab flattening member 4 in the second direction Y is greater than or equal to 0 mm and less than or equal to 10 mm.

For example, the distance d between the center point of the second laser galvanometer 221 and the center point of the tab flattening member 4 in the second direction Y may be, but is not limited to any value such as 0 mm, 2 mm, 4 mm, 6 mm, 8 mm, or 10 mm, as long as it ranges from 0 mm to 10 mm. In this way, it can be ensured that the laser incident cutting angle of the second laser galvanometer 221 is greater than 90 degrees.

In one embodiment, the position of each of the first laser cutting assembly and the second laser cutting assembly may be manually adjusted to position the center point of the first laser galvanometer 211 directly above the electrode plate cutting line L1 and position the center point of the second laser galvanometer 221 above the tab cutting area.

In one embodiment, the electrode plate die-cutting device can automatically adjust the position of each of the first laser cutting assembly and the second laser cutting assembly. The electrode plate die-cutting device further includes a camera assembly, a control assembly 5, a first drive assembly 6, and a second drive assembly.

In this embodiment, the camera assembly is configured to obtain a dimensional parameter and position information of the electrode plate material strip, position information of the first laser cutting assembly, and position information of the second laser cutting assembly.

In an embodiment, the camera assembly is a CCD camera. When the electrode plate material strip is conveyed to the cutting area, both a conveying mechanism and the electrode plate material strip stop moving. The CCD camera is used to take pictures of the electrode plate material strip, the first laser cutting assembly, and the second laser cutting assembly. The dimensional parameter of the electrode plate material strip, the position information of the first laser cutting assembly, and the position information of the second laser cutting assembly can be obtained based on the pictures.

In one embodiment, as shown in FIG. 8, FIG. 8 is a schematic structural view of a first laser cutting assembly and a first drive assembly according to an embodiment of the present invention. The first drive assembly 6 is taken as an example for illustration. The first drive assembly 6 includes a servo driver 61, a servo motor 62, and a lead screw 63. The servo driver 61 is in communication connection with the control assembly 5 and the servo motor 62. The lead screw 63 is drivingly connected to the servo motor 62. The lead screw 63 penetrates a fixing member 64 and is threadedly connected to the fixing member 64. The fixing member 64 may be a lead screw fixing rod. The lead screw 63 is rotatably connected to the first laser cutting assembly 21.

The present invention has beneficial effects as follows. In the present invention, the electrode plate die-cutting device includes a first laser cutting assembly and a second laser cutting assembly. The first laser cutting assembly is configured to perform reciprocating cutting, along the electrode plate cutting line, on the electrode plate material conveyed to the electrode plate cutting area to form an electrode plate. The second laser cutting assembly is configured to perform reciprocating cutting, along the tab cutting line, on the tab foil material conveyed to the tab cutting area to form a tab. By placing the first laser galvanometer above the electrode plate cutting line and the second laser galvanometer of the second laser cutting assembly above the tab cutting area, the laser incident cutting angle of each of the first laser cutting assembly and the second laser cutting assembly is increased. In this way, the severe vaporization of the upper surface material of the tab foil material caused by the repeated cutting of one position can be avoided. Thus, the problem of the foil exposure caused by the laser cutting can be solved, thereby reducing the risk of the short circuit after the electrode plates are assembled into the cell pack.

Obviously, the above embodiments of the present invention are merely examples for the purpose of clearly illustrating the present invention, and are not intended to limit the embodiments of the present invention. For those skilled in the art, other variations or modifications can be made based on the above description. It is neither necessary nor possible to exhaustively enumerate all the embodiments herein. Any modifications, equivalent substitutions, and improvements made within the spirit and principles of the present invention shall be included within the protection scope of the claims of the present invention.

## Claims

1. An electrode plate die-cutting method, comprising:
conveying an electrode plate material strip in a first direction to a cutting area of an electrode plate die-cutting device, enabling an electrode plate material of the electrode plate material strip to be opposite to an electrode plate cutting area of the cutting area and a tab foil material of the electrode plate material strip to be opposite to a tab cutting area of the cutting area;
adjusting, based on the electrode plate material strip, a position of each of a first laser cutting assembly and a second laser cutting assembly of the electrode plate die-cutting device to position a center point of a first laser galvanometer of the first laser cutting assembly above a predetermined electrode plate cutting line and to position a center point of a second laser galvanometer of the second laser cutting assembly above the tab cutting area; and
performing, by using the first laser cutting assembly, reciprocating cutting on the electrode plate material along the electrode plate cutting line to form an electrode plate, and performing, by using the second laser cutting assembly, reciprocating cutting on the tab foil material along a tab cutting line to form a tab, wherein:
the electrode plate cutting line is parallel to a second direction;
the tab cutting line is parallel to the first direction; and
the first direction intersects the second direction.

2. The electrode plate die-cutting method according to claim 1, wherein said adjusting, based on the electrode plate material strip, the position of each of the first laser cutting assembly and the second laser cutting assembly of the electrode plate die-cutting device comprises:
obtaining a dimensional parameter and position information of the electrode plate material strip, position information of the first laser cutting assembly, and position information of the second laser cutting assembly;
determining a first distance compensation value of the first laser cutting assembly in the second direction and a second distance compensation value of the second laser cutting assembly in the second direction based on the dimensional parameter and position information of the electrode plate material strip, the position information of the first laser cutting assembly, and the position information of the second laser cutting assembly; and
adjusting, based on the first distance compensation value and the second distance compensation value, the position of each of the first laser cutting assembly and the second laser cutting assembly to position the center point of the first laser galvanometer above the electrode plate cutting line and to position the center point of the second laser galvanometer above the tab cutting area.

3. The electrode plate die-cutting method according to claim 2, wherein said adjusting the position of the first laser cutting assembly based on the electrode plate material strip comprises:
determining coordinates of a midpoint of the electrode plate cutting line and the center point of the first laser galvanometer based on the dimensional parameter and position information of the electrode plate material strip and the position information of the first laser cutting assembly;
determining the first distance compensation value of the first laser cutting assembly based on the coordinates of the midpoint of the electrode plate cutting line and the center point of the first laser galvanometer; and
adjusting the position of the first laser cutting assembly based on the first distance compensation value to allow the center point of the first laser galvanometer to coincide with the midpoint of the electrode plate cutting line in a third direction, the third direction being perpendicular to the first direction and the second direction.

4. The electrode plate die-cutting method according to claim 3, wherein the electrode plate material is symmetrical about an electrode plate centerline, the electrode plate centerline being parallel to the first direction and intersecting the electrode plate cutting line at the midpoint of the electrode plate cutting line.

5. The electrode plate die-cutting method according to claim 3, wherein subsequent to said adjusting the position of the first laser cutting assembly, a connection line between the center point of the first laser galvanometer and the electrode plate cutting line is perpendicular to the first direction.

6. The electrode plate die-cutting method according to claim 2, wherein said adjusting the position of the second laser cutting assembly based on the electrode plate material strip comprises:
determining a distance between the center point of the second laser galvanometer and the tab cutting line in the second direction based on the dimensional parameter and position information of the electrode plate material strip and the position information of the second laser cutting assembly;
determining a first angle between a surface of the electrode plate material adjacent to the first laser galvanometer and a connection line between the center point of the second laser galvanometer and the tab cutting line;
determining, in response to determining that the first angle is less than or equal to 90 degrees or greater than 150 degrees, the second distance compensation value of the second laser cutting assembly based on the distance between the center point of the second laser galvanometer and the tab cutting line in the second direction and a height of the second laser galvanometer; and
adjusting the position of the second laser cutting assembly based on the second distance compensation value to allow the first angle to be greater than 90 degrees and less than or equal to 150 degrees.

7. The electrode plate die-cutting method according to any one of claims 1 to 6, wherein in the action of performing, by using the first laser cutting assembly, the reciprocating cutting on the electrode plate material along the electrode plate cutting line to form the electrode plate, and performing, by using the second laser cutting assembly, the reciprocating cutting on the tab foil material along the tab cutting line to form the tab, the electrode plate material strip is cut by using at least one laser cutting assembly unit, wherein each of the at least one laser cutting assembly unit comprises one first laser cutting assembly and two second laser cutting assemblies, the first laser cutting assembly being disposed between the two second laser cutting assemblies, and
wherein the two second laser cutting assemblies in one of the at least one laser cutting assembly unit are respectively configured to cut tab foil materials at two adjacent sides of the tab.

8. The electrode plate die-cutting method according to claim 7, wherein the electrode plate material strip is cut by using a plurality of laser cutting assembly units, and
wherein the electrode plate die-cutting method further comprises:
adjusting center points of a plurality of second laser galvanometers to be located on one straight line.

9. The electrode plate die-cutting method according to any one of claims 1 to 6, wherein:
the electrode plate material is partially attached to an outer peripheral surface of a conveying member of the electrode plate die-cutting device;
the tab foil material passes through a gap between a tab flattening member and the conveying member of the electrode plate die-cutting device; and
said adjusting the position of the first laser cutting assembly based on the electrode plate material strip comprises:
determining, based on position information of the conveying member and position information of the first laser cutting assembly, whether an orthogonal projection of a connection line between the center point of the first laser galvanometer and a center point of the conveying member in a third direction is parallel to the first direction;
in response to determining that the orthogonal projection of the connection line between the center point of the first laser galvanometer and the center point of the conveying member in the third direction is not parallel to the first direction, determining a first distance compensation value of the first laser cutting assembly in the second direction based on the position information of the conveying member and the position information of the first laser cutting assembly; and
adjusting the position of the first laser cutting assembly based on the first distance compensation value to allow the orthogonal projection of the connection line between the center point of the first laser galvanometer and the center point of the conveying member in the third direction to be parallel to the first direction.

10. The electrode plate die-cutting method according to claim 9, wherein said adjusting the position of the second laser cutting assembly based on the electrode plate material strip comprises:
determining, based on position information of the tab flattening member and position information of the second laser cutting assembly, whether a projection of a connection line between the center point of the second laser galvanometer and a center point of the tab flattening member in the third direction is parallel to the first direction or whether the center point of the second laser galvanometer is located within a predetermined distance range on a side of the center point of the tab flattening member away from the electrode plate cutting area;
in response to determining that the projection of the connection line between the center point of the second laser galvanometer and the center point of the tab flattening member in the third direction is not parallel to the first direction and that the center point of the second laser galvanometer is not located within the predetermined distance range on the side of the center point of the tab flattening member away from the electrode plate cutting area, determining a second distance compensation value of the second laser cutting assembly in the second direction based on the position information of the tab flattening member and the position information of the second laser cutting assembly; and
adjusting the position of the second laser cutting assembly based on the second distance compensation value to allow the projection of the connection line between the center point of the second laser galvanometer and the center point of the tab flattening member in the third direction to be parallel to the first direction or allow the center point of the second laser galvanometer to be located within the predetermined distance range on the side of the center point of the tab flattening member away from the electrode plate cutting area.

11. An electrode plate die-cutting device, configured to cut an electrode plate material strip, wherein the electrode plate material strip comprises an electrode plate material and a tab foil material, and wherein the electrode plate die-cutting device has an electrode plate cutting area opposite to the electrode plate material and a tab cutting area opposite to the tab foil material, the electrode plate die-cutting device comprising:
a first laser cutting assembly configured to perform reciprocating cutting, along a predetermined electrode plate cutting line, on the electrode plate material conveyed to the electrode plate cutting area to form an electrode plate, wherein the electrode plate material strip is conveyed in a direction parallel to a first direction, wherein the electrode plate cutting line is located within the electrode plate cutting area and is parallel to a second direction, the first direction intersecting the second direction, and wherein the first laser cutting assembly comprises a first laser galvanometer, a center point of the first laser galvanometer being located above the electrode plate cutting line; and
a second laser cutting assembly configured to perform reciprocating cutting, along a predetermined tab cutting line, on the tab foil material conveyed to the tab cutting area to form a tab, wherein the tab cutting line is located at a boundary between the electrode plate cutting area and the tab cutting area and is parallel to the first direction, and wherein the second laser cutting assembly comprises a second laser galvanometer, a center point of the second laser galvanometer being located above the tab cutting area.

12. The electrode plate die-cutting device according to claim 11, wherein the center point of the first laser galvanometer coincides with a midpoint of the electrode plate cutting line in a third direction, the third direction being perpendicular to the first direction and the second direction.

13. The electrode plate die-cutting device according to claim 11, wherein a connection line between the center point of the first laser galvanometer and the electrode plate cutting line is perpendicular to the first direction.

14. The electrode plate die-cutting device according to claim 11, wherein an angle between a surface of the electrode plate material adjacent to the first laser galvanometer and a connection line between the center point of the second laser galvanometer and the tab cutting line is greater than 90 degrees and less than or equal to 150 degrees.

15. The electrode plate die-cutting device according to claim 11, further comprising at least one laser cutting assembly unit, wherein each of the at least one laser cutting assembly unit comprises one first laser cutting assembly and two second laser cutting assemblies, the first laser cutting assembly being disposed between the two second laser cutting assemblies,
wherein the two second laser cutting assemblies in one of the at least one laser cutting assembly unit are respectively configured to cut tab foil materials at two adjacent sides of the tab.

16. The electrode plate die-cutting device according to claim 15, wherein the at least one laser cutting assembly unit comprises a plurality of second laser galvanometers, wherein:
center points of the plurality of second laser galvanometers are located on one straight line; or
a connection line between the center points of the plurality of second laser galvanometers is parallel to the tab cutting line.

17. The electrode plate die-cutting device according to claim 11, further comprising a conveying member and a tab flattening member spaced apart from the conveying member, the electrode plate material being partially attached to an outer peripheral surface of the conveying member, and the tab foil material passing through a gap between the tab flattening member and the conveying member, wherein:
a projection of a connection line between the center point of the first laser galvanometer and a midpoint of a centerline of the conveying member in a third direction is parallel to the first direction; and
a projection of a connection line between the center point of the second laser galvanometer and a center point of the tab flattening member in the third direction is parallel to the first direction, or the center point of the second laser galvanometer and the center point of the tab flattening member are away from a side of the electrode plate cutting area, the third direction being perpendicular to the first direction and the second direction.

18. The electrode plate die-cutting device according to claim 17, wherein a distance between the center point of the second laser galvanometer and the center point of the tab flattening member in the second direction is greater than or equal to 0 mm and small than or equal to 10 mm.

19. The electrode plate die-cutting device according to any one of claims 11 to 18, wherein:
the first laser cutting assembly comprises a first laser corresponding to and cooperating with the first laser galvanometer; and
the second laser cutting assembly comprises a second laser corresponding to and cooperating with the second laser galvanometer, each of the first laser and the second laser being a picosecond laser.

20. The electrode plate die-cutting device according to any one of claims 11 to 18, further comprising:
a camera assembly configured to obtain a dimensional parameter and position information of the electrode plate material strip, position information of the first laser cutting assembly, and position information of the second laser cutting assembly;
a control assembly in communication connection with the camera assembly, the control assembly being configured to determine a first distance compensation value of the first laser cutting assembly in the second direction and a second distance compensation value of the second laser cutting assembly in the second direction based on the dimensional parameter and position information of the electrode plate material strip, the position information of the first laser cutting assembly, and the position information of the second laser cutting assembly;
a first drive assembly in communication connection with the control assembly, the first drive assembly being connected to the first laser cutting assembly and configured to drive, based on the first distance compensation value, the first laser cutting assembly to move in the second direction to a position above the electrode plate cutting line; and
a second drive assembly in communication connection with the control assembly, the second drive assembly being connected to the second laser cutting assembly and configured to drive, based on the second distance compensation value, the second laser cutting assembly to move in the second direction to a position above the tab cutting area.
